Europäisches Patentamt

European Patent Office

Office européen des brevets

(19)

(11) Numéro de publication: **0 267 870 B1**

(12) **FASCICULE DE BREVET EUROPEEN**

(45) Date de publication de fascicule du brevet:
**11.12.91**

(51) Int. Cl.⁵: **H02G  13/00**

(21) Numéro de dépôt: **87810532.9**

(22) Date de dépôt: **16.09.87**

(54) **Système de protections antifoudres.**

(30) Priorité: **01.11.86 CH 4379/86**

(43) Date de publication de la demande:
**18.05.88 Bulletin  88/20**

(45) Mention de la délivrance du brevet:
**11.12.91 Bulletin  91/50**

(84) Etats contractants désignés:
**BE CH DE ES FR GB GR IT LI SE**

(56) Documents cités:
**FR-A- 2 129 645**
**GB-A- 2 013 998**

(73) Titulaire: **Energie Froide International SA**
**36 avenue Krieg**
**CH-1208 Genève(CH)**

(72) Inventeur: **Invernizzi, Cesare Giulio**
**14 bis Avenue Dumas**
**CH-1206 Geneve(CH)**

Rank Xerox (UK) Business Services

## Description

1/ Il est connu que les installations de protection antifoudre présentent de graves dangers car, quand une foudre les frappe, des décharges dites latérales, à haute énergie, éclatent entre les conducteurs de cuivre nu normalisés pour leur mise à la terre et des objets, ou des personnes, dans leur voisinage.

2/ Par l'élévation toujours plus grande des structures à protéger, les courants de foudre ne peuvent plus rester confinés dans les conducteurs nus de mise à la terre sans que des claquages se produisent avec des conséquences souvent désastreuses:

- incendies;
- foudroiement de personnes;
- destruction de matériel électrique et électronique;
- etc.

3/ L'Auteur de la présente invention a déjà proposé un système de mise à la terre des foudres palliant à cet inconvénient majeur (US-A-3 919 956), consistant à prévoir autour du conducteur de mise à terre une gaine métallique maintenue à distance de ce conducteur par une couche de matériel isolant, cette gaine métallique étant elle aussi renfermée dans une couche isolante, l'ensemble étant mis à la terre.

4/ C'est par des concepts propres aux techniques hautes tensions que les améliorations décrites dans la présente invention ont pu être faites -par rapport aux conducteurs conventionnels de mise à la terre -par rapport à toutes les installations antifoudres précédentes ne pouvant être intégrées en un ensemble électriquement hermétique, qui ne peut être consenti que si on dispose d'une structure coaxiale permettant l'herméticité -et, finalement, par rapport aux brevets du paragraphe 3/ ci-dessus.

5/ Des décharges latérales se produisent le long des conducteurs de mise à la terre nus ou isolés simplement quant le gradient de tension devient plus grand que la valeur de tenue. La valeur du champ électrique à la surface d'un conducteur cylindrique nu dépend de son diamètre et de l'environnement. La tension qui apparaît sur ce conducteur lors du passage d'un courant de foudre dépend de la résistance ohmique longitudinale en courant alternatif de ce dernier.

6/ Cette résistance peut être calculée en résolvant les équations de Maxwell pour un conducteur cylindrique au moyen des fonctions de Bessel. Une vue représentative du phénomène est donnée par la notion de profondeur de pénétration. De cette façon, il est possible de mettre en évidence la "partie du conducteur effectivement utilisée". Le spectre des fréquences qui compose un courant de foudre s'étend de 20 à 100 kHz. Pour un conducteur cylindrique en cuivre, on obtient respectivement 0,48 mm et 0,21 mm de profondeur de pénétration. Donc, un conducteur cylindrique creux présente des avantages sur un conducteur plein de section équivalente.

Exemple:

fil en cuivre nu de 6 mm ⌀

$R_{ca}$ = 2,1 mΩ/m ( 20 kHz)

$R_{ca}$ = 4,6 mΩ/m (100 kHz)

câble spécial EF

$R_{ca}$ = 0,9 mΩ/m ( 20 kHz)

$R_{ca}$ = 2,2 mΩ/m (100 kHz)

Facteur d'amélioration env. 2.

Les valeurs ci-dessus ont été calculées avec des formules classiques tirées des 3 références suivantes:

(1) Hochspannungsfelder H. Prinz Verlag Oldenburg

(2) Hochspannungstechnik Vorlesung Prof. Dr K. Berger

(3) Wirbelströme und Schirmung in der Nachrichtentechnik Dr phil. H. Kaden Springer Verlag 7/ Pour la structure objet de la présente invention, ces valeurs ont été vérifiées par des mesures de laboratoire. Les résultats ont été les suivants:

i/ Lorsque la couche intermédiaire isolante est correctement dimensionnée, il ne se produit jamais de décharges latérales et on ne constate aucun endommagement de la structure -même si des surtensions sont produites dans le conducteur central;

ii/ Ce que l'on observe lors de ces surtensions ce sont des effluves de très basse énergie qui peuvent apparaître autour de la structure sans l'endommager. Ces décharges avaient été observées déjà par Tesla, il y a un siècle, lors de ses expériences sur des courants à haute fréquence.

8/ Etant donné que la valeur des surtensions dans un conducteur de foudre dépend de la valeur de crête et de la forme d'onde des décharges -pour étudier le comportement de la mise à la terre du système objet de la présente invention et en définir les caractéristiques, l'Auteur a pu bénéficier des données très complètes d'impulsion des courants de foudres présentées récemment par Anderson et Eriksson. La présente invention permet une mise à la terre capable de supporter tous les courants de foudre. L'invention concerne une descente de protections antifoudres telle que décrite dans la revendication 1 ainsi qu'un système de protections antifoudres conforme à la revendication 3.

9/ L'étude approfondie de tous ces paramètres a mis en évidence que l'impédance, c'est-à-dire la résistance ohmique et l'inductance du conducteur de foudre et de la gaine métallique, a un effet défavorable, d'où l'avantage de la réduire au maximum. Or, les câbles blindés utilisent un élément conducteur central constitué par un ensemble de fils métalliques enroulés en hélice autour d'un noyau central en matière isolante et on réalise le blindage métallique pareillement au moyen de fils ou de bandes métalliques enroulés en hélice sur la couche isolante entourant l'élément conducteur intérieur.

10/ Le résultat est que, même si les spires formant l'élément conducteur interne et la gaine sont jointives, ou même chevauchantes (s'il s'agit non pas de fils mais de bandes métalliques), l'inévitable couche d'oxyde sur ces fils ou bandes fait que le courant suit un parcours hélicoïdal et non pas rectiligne, d'où résistance ohmique et inductance accrues.

11/ En utilisant des fils ou bandes métalliques parallèles à la ligne centrale du câble, on réduit très sensiblement l'impédance et on améliore les performances d'un conducteur de foudre dans le sens de la présente invention.

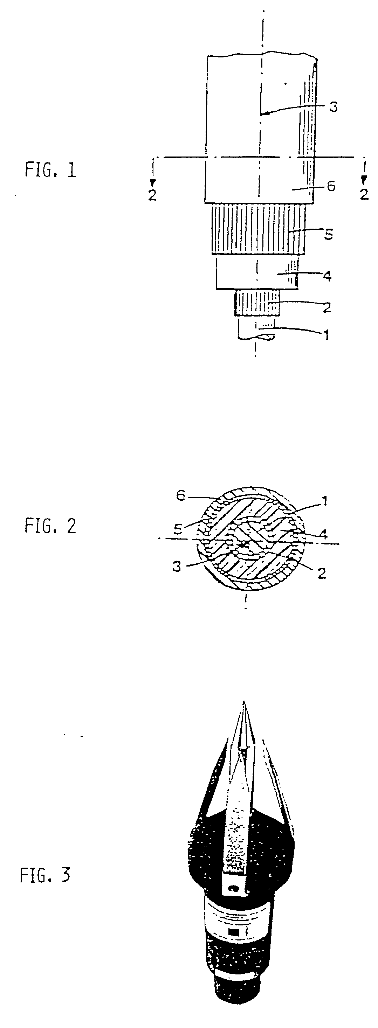

12/ Le dessin annexé représente un exemple d'exécution de ce conducteur de foudre. La Figure 1 est une vue latérale partielle, avec des arrachements montrant sa structure interne. La Figure 2 est une vue en coupe transversale suivant 2-2 de la Figure 1.

13/ Ce conducteur de foudre est une structure dont on voit en 1 l'âme de section circulaire en matière isolante autour de laquelle sont disposés de façon jointive des fils métalliques 2 s'étendant parallèlement à la ligne centrale 3, qui est l'axe de cet ensemble s'il est rectiligne. L'ensemble de ces fils 2 constitue un premier organe de mise à terre d'une installation antifoudre depuis la pointe (non représentée) de l'installation jusqu'à la prise de terre (non représentée). En raison de l'effet pelliculaire propre au courant haute tension, il est inutile que l'espace occupé par le noyau isolant 1 soit rempli par les fils conducteurs 2.

14/ On voit en 4 une couche de matière isolante entourant la couche de fils 2 est dont l'épaisseur et la qualité sont étudiées pour résister aux surtensions se produisant dans l'élément 2 lorsque le courant de foudre le parcourt. En 5 est disposé un 2ème série de fils métalliques jointifs s'étendant eux aussi parallèlement à l'axe central 3. L'ensemble de ces fils 5 constitue une 2ème conducteur, qui entoure complètement la gaine isolante 4 et, par conséquent, aussi le premier élément conducteur 2. Cet ensemble de fils 5 constitue un blindage électrique pour les fils 2 et est mis à la terre à son extrémité inférieure (non représentée).

15/ Autour de la couche de fils conducteurs 5 est disposée une gaine de protection 6 en matière isolante convenablement dimensionnée. Les fils 5 pourraient être des bandes métalliques parallèles chevauchantes, pour que leur ensemble forme un véritable tube conducteur.

16/ On pourrait imaginer que le 2ème élément conducteur (5) soit réellement tubulaire -mais cela aurait le grave défaut de rendre difficile d'enrouler cette structure sans l'endommager et la mettre sur une bobine comme c'est l'usage pour le stockage et le transport des câbles. En prévoyant un tube ondulé, on faciliterait cet enroulement mais on augmenterait la résistance ohmique et, surtout, l'inductance, puisque dans ce cas le courant dans cet élément suivrait un parcours ondulé.

17/ La sollicitation électrique de l'isolation doit être définie sur toute la longueur de la structure, indépendamment des conditions extérieures - d'où la nécessité, comme dans les câbles haute tension, d'utiliser un écran conducteur concentrique. Ainsi, ce conducteur de foudre pourra être posé près de pointes ou d'arêtes métalliques sans effet négatif sur sa tenue électrique.

18/ L'isolation haute tension doit être protégée mécaniquement, pour éviter tout risque d'endommagement lors du transport, du montage et de la mise en service. L'ensemble métallique robuste et une gaine résistante à des conditions climatiques extrêmes, remplit parfaitement ce rôle.

19/ Finalement, grâce à l'écran protecteur, il est possible de vérifier, à tout moment, l'état de l'isolation à haute tension par deux simples essais électriques.

20/ Toutes ces considérations ont permis de réaliser une descente de protection antifoudre qui répond aux exigences du Monde Moderne, avec un risque de claquages latéraux de 45 à 90 fois inférieur à celui d'un conducteur nu. Les expériences de laboratoire et les valeurs calculées confirment le bien-fondé de ce concept.

21/ Disposant d'une structure coaxiale -mais qui n'est ni fabriquée, ni employée comme les câbles coaxiaux conventionnels-l'Auteur de la présente invention a eu pour la première fois la possibilité de se rendre compte en laboratoire, par des modèles mathématiques et par une vaste expérience dans la Nature, que la protection antifoudre ne pouvait être effective que si elle n'électrisait pas les structures. Pour cette réalisation fondamentale, il a conçu un terminal haute tension grâce auquel le présent système peut conduire les foudres à terre sans électrisation des structures.

**Revendications**

1. Descente de protections antifoudres (Fig. 1) comprenant un premier organe conducteur (2) de la foudre, une gaine isolante (4) entourant ce premier organe conducteur, et un deuxième organe conducteur (5) entourant complètement cette gaine isolante, mise à la terre à son extrémité inférieure, caractérisée en ce que les deux dits organes conducteurs (2 et 5) sont formés chacun par un ensemble de conducteurs métalliques jointifs enforme de fils ou bandes s'étendant tous parallèlement à la ligne centrale (3) de l'ensemble formé par ces deux éléments conducteurs (2 et 5) et la gaine isolante intermédiaire (4).

2. Descente de protections antifoudres selon la revendication 1 (Fig. 2), caractérisée en ce que le deuxième organe conducteur (5) est formé par des bandes chevauchantes pour former ensemble un cylindre métallique.

3. Système de protections antifoudres utilisant une descente de protections antifoudres conforme aux revendications 1 et 2, caractérisé en ce qu'il possède à sa partie supérieure un terminal haute tension (Fig. 3) conçu pour permettre que toutes les composantes de ce système puissent réaliser une protection antifoudre électriquement hermétique.

**Claims**

1. Lightning protection downconductor (Fig. 1) comprising a first lightning conductive component (2), an insulating sheath (4) surrounding this first conductive component, and a second conductive component (5) completely surrounding this insulating sheath, said second conductive component being earthed at its lower end, characterized in that each of the two said conductive components (2 and 5) are formed by an assembly of metallic conductors, which are contiguous in the shape of wires or strips all extending in a direction parallel to the central line (3) of the assembly formed by said two conductive components (2 and 5) and the intermediate insulating sheath (4).

2. Lightning protection downconductor according to claim 1 (Fig. 2) characterized in that the second conductive component (5) is formed by overlapping strips so that together they form a metallic cylinder.

3. Lightning protection system using a lightning downconductor according to claim 1 and 2, characterized in that its upper part is fitted with a high voltage terminal (Fig. 3) thus making it possible that all the components of this system constitute an electrically hermetic lightning protection.

**Patentansprüche**

1. Blitzschutzniederführung (Fig. 1) mit einem ersten, von einem Isoliermantel (4) umgebenen Blitzableiter (2) und einem zweiten Ableiter (5) zur völligen Verkleidung des Isoliermantels, Erdung am unteren Ende, wobei beide Ableiter (2 und 5) als Einheit aus fugendichten Draht- oder Metalleitern bestehen, die alle parallel zur Mittellinie (3) der von diesen beiden Leitungselementen (2 and 5) und dem sich dazwischen befindenden Isoliermantel (4) gebildeten Einheit verlaufen.

2. Blitzschutzniederführung gemäss Anspruch 1 (Fig. 2), wobei der zweite Ableiter (5) aus überlappenden Bändern besteht, die zusammen einen metallzylinder bilden.

3. Blitzschutzsystem mit Blitzschutzniederfuhrung gemäss Ansprüchen 1 und 2, wobei sich im oberen Teil ein Hochspannungsanschluss (Fig. 3) befindet, so dass sämtliche Systemteile einen dicht gekapselten Blitzschutz bilden.

FIG. 1

FIG. 2

FIG. 3